# EUROPEAN PATENT APPLICATION

(11) **EP 4 687 155 A2**
(43) Date of publication of application: **04.02.2026**
(21) Application number: 25191112.9
(22) Date of filing: 22.07.2025
(51) Int. Cl.: G21C 23/00, G21G 1/00, G21G 1/02

(54) **SYSTEM AND METHODS FOR ISOTOPE IRRADIATION IN A NUCLEAR REACTOR PLANT**

(30) Priority: 30.07.2024 US 202463677072 P
(71) Applicant: Laurentis Energy Partners Inc., Toronto, Ontario M5G 1X6 (CA)
(72) Inventor: AMIRGHASSEMI, Behrouz, Toronto, M5G 1X6 (CA); PERSAUD, Navindra, Toronto, M5G 1X6 (CA)
(74) Representative: HGF

(57) **Abstract**

In the field of medicine and pharmacy, radioisotopes may be valuable for imaging and treatment. Various irradiation systems have been known to be used inside nuclear reactor facilities to create radioisotopes. However, current systems face challenges such as obstructed view in the viewport, and an inability to positively locate targets in the system. In some embodiments, an isotope irradiation system (150) is provided for use in a nuclear reactor facility. The isotope irradiation system may include a removeable support structure (140), an interfacing system (152), a cartridge load and retrieval system (160), and an isotope target transportation system (182). The disclosed isotope irradiation system may address the challenges associated with conventional systems.

## Description

### CROSS-REFERENCE TO RELATED APPLICATIONS

This application incorporates by reference and claims priority to and the benefit of U.S. Provisional Application No. 63/677072 filed July 30, 2024.

### FIELD

The present disclosure relates generally to isotope irradiation. In particular, the present disclosure relates to isotope irradiation systems and related methods for use at a nuclear reactor plant, for loading, transporting, locating, and retrieving isotope targets.

### BACKGROUND

Isotopes are used in various fields such as research, agriculture and medicine. In the field of medicine and pharmaceuticals, radioisotopes, also known as radioactive isotopes, may be valuable for use in medical diagnostic imaging and treatment. For example, short-term radioisotopes, with half-lives spanning days or even hours, are of particular importance in cancer and other medical therapies due to their unique radiation profiles and rapid decay into harmless, stable isotopes that are excreted from the body after the radiation dose is administered.

Producing these medical radioisotopes typically requires complex and costly irradiation and extraction equipment, and therefore can be impractical at medical facilities due to cost, space, or safety concerns. Various short-term radioisotopes can be produced through nuclear fission, neutron bombardment, or other irradiation at nuclear reactor plants.

### SUMMARY

For example, an isotope irradiation system may be implemented at a nuclear power plant to expose isotope targets to neutron flux found in the operating nuclear reactor. This neutron flux can generate short-term radioisotopes within the irradiation targets, which may then be harvested and transported to medical or pharmaceutical facilities for use. Heavy water type nuclear reactor plants, such as CANDU pressurized heavy water reactors, may be particularly useful for this purpose, as they tend to have a higher neutron flux compared to light water nuclear reactors.

Existing systems for isotope irradiation at a nuclear power plant face several challenges.

For example, existing isotope irradiation systems may use guide tubes that extend from the bottom of thimbles to the bottom of the reactor vessel or calandria. The guide tubes may be used to accommodate or facilitate insertion and removal of irradiation targets. The guide tubes may be already existent within a nuclear reactor assembly, or may be newly installed within a viewing port, which is a means of providing visual inspection and monitoring of the reactor core and related components. However, these guide tubes may hinder vision through a viewing port of a nuclear reactor.

Currently the viewing port has two purposes. First, it allows for visual inspections inside the calandria. An installed guide tube would prevent the ability to do this because it would block the view. Second, the viewing port is used to temporarily install "Start Up Instrumentation" in the core to support starting the reactor after long shutdowns. Guide tubes otherwise in use, would prevent visual inspections and start up instrumentation inside the calandria. Also, for vertical flux detector guide tubes there is a limit on the size of the guide tube; 1 inch diameter compared to 4-6 inches for the other ports.

The present inventors have provided for a third use for the viewing port, namely isotope irradiation. By use of the present described system, having no guide tube installed inside the calandria allows an operator to switch between the two existing uses while providing for a third use. of the calandria.

It may also be difficult to positively know the exact location of the isotope targets while they are within or near the reactor vessel. The location may have to be inferred using sensors such as winch motor rotary location, or by observing neutronics effects.

Due to the radioactive nature of radioisotopes, existing systems rely on a separate flasking operations where isotope targets are transferred from the irradiation mechanism into a transportation flask that is safe to handle. This process may be unsafe and time consuming.

Additionally, in all isotope irradiation systems, it is crucial that the moderator pressure boundary be maintained when the nuclear reactor is in operation. This may be achieved by ensuring that the outer envelope of the irradiation system is a contained structure that is not opened during operation. Therefore, inspection or repair of the irradiation system may only be achievable when the nuclear reactor is shut off.

It is desirable to have an isotope irradiation system that addresses these challenges associated with existing systems.

According to one embodiment, there is provided an isotope irradiation system for use in a nuclear reactor facility comprising a reactor vessel, a reactivity mechanism deck, and a thimble extending between the reactivity mechanism deck and the reactor vessel, the isotope irradiation system comprising: a removeable support structure configured to be secured within the thimble, the removeable support structure comprising: a first end and a bottom end, the bottom end configured to be adjacent a bottom end of the thimble; and a hollow interior to enable travel of a cartridge containing isotope targets therein.

According to another embodiment, there is provided a method of irradiating isotope targets in a nuclear reactor facility comprising a reactor vessel, a vertical or horizontal reactivity mechanism deck, and a thimble extending between the reactivity mechanism deck and the reactor vessel, the method comprising: transporting a cartridge containing isotope targets to the nuclear reactor facility; from the reactivity mechanism deck, loading the cartridge into an isotope irradiation system using a rotatable device of the isotope irradiation system, at a first position of the rotatable device; rotating the rotatable device from the first position to a second position, wherein in the second position the cartridge is axially aligned with the thimble; releasably locking the cartridge to a first end of a ram, wherein a second end of the ram is connected to a drive unit; transporting the cartridge through the thimble into the reactor vessel using the drive unit; exposing the isotope targets in the cartridge to irradiation; transporting the cartridge out of the reactor vessel using the drive unit; releasing the cartridge from the first end of the ram onto the rotatable device; rotating the rotatable device from the second position to the first position, while automatically depositing the cartridge into a shielded flask; and retrieving the cartridge and flask from the rotatable device at the first position; wherein a removeable support structure is secured within the thimble, the removeable support structure having a hollow interior to allow travel of the cartridge containing the isotope targets therein, and wherein a length of the removeable support structure is similar to a length of the thimble.

### BRIEF DESCRIPTION OF THE DRAWINGS

Embodiments will be described, by way of example only, with reference to the accompanying figures wherein:
Figure 1 is a elevational sectional view illustrating a nuclear reactor assembly and an isotope irradiation system for use in conjunction with the nuclear reactor assembly, according to one embodiment;
Figure 2 is a zoomed-in view illustrating portions of the isotope irradiation system of Figure 1, according to one embodiment;
Figures 3A and 3B are top sectional views of a first brake device that can be used in the isotope irradiation system of Figure 1, according to one embodiment;
Figures 4A and 4B are, respectively, a top view and a side view of a second brake device that can be used in the isotope irradiation system of Figure 1, according to one embodiment;
Figures 4C and 4D are sectional views of the second brake device of Figures 4A and 4B, according to one embodiment;
Figure 5 is a sectional view of an isotope target transportation ram, according to one embodiment;
Figure 6 is a sectional view illustrating portions of a first isotope target transportation system in an extended state with a cartridge, according to one embodiment;
Figure 7 is a sectional view illustrating portions of a second isotope target transportation system in a retracted state with a cartridge, according to one embodiment;
Figure 8 is a sectional view illustrating portions of the second isotope target transportation system in an extended state with a cartridge, according to one embodiment;
Figures 9A-9C illustrate a sequence of steps for releasably locking a target cartridge to the ram shown in Figure 5, according to one embodiment;
Figures 10A and 10B illustrate, respectively, a cross-sectional view and a top view of a rotatable device for loading and retrieving a target cartridge, according to one embodiment;
Figure 10C illustrate a plate for use with the rotatable device shown in Figures 10A and 10B, according to one embodiment;
Figures 11A-11E illustrate a sequence of steps for loading and retrieving a target cartridge using the rotatable device shown in Figures 10A and 10B, according to one embodiment; and
Figure 12 illustrates a sectional view of an interfacing system of the isotope irradiation system of Figure 1, according to one embodiment.

### DETAILED DESCRIPTION

For illustrative purposes, specific embodiments will now be explained in greater detail below in conjunction with the figures.

A nuclear reactor assembly includes a reactor core which may be housed within an air-locked vault, and in the case of a heavy water reactor like CANDU, specifically housed in a vessel known as the calandria. The calandria may contain a heavy-water moderator. Fuel channel assemblies may run through the calandria, and feeder tubes may communicate with the fuel channel assemblies to provide heavy water to the fuel channel assemblies during operation of the reactor.

A plurality of thimbles may extend vertically between a reactivity mechanism deck, which allows operators to control the reactor's reactivity and monitor its operation safely, and the reactor core. A thimble is a cylindrical tube that may be made of a corrosion-resistant material such as stainless steel or zirconium alloy. Thimbles may be used to withdraw samples from the reactor core for analysis, and may also conventionally be used to house guide tubes, which extend into the reactor vessel, through to the bottom of the calandria. In creating isotopes for medical and pharmaceutical applications, existing guide tubes may be used, or new guide tubes may be installed, to facilitate the placement of isotope targets into the reactor vessel, where they are exposed to neutron flux for the purpose of isotope irradiation.

As mentioned, there are challenges associated with using guide tubes for isotope irradiation, particularly in the viewing port. For example, the presence of guide tubes can obstruct the view through a nuclear reactor's viewing port used for visual inspections inside the calandria.

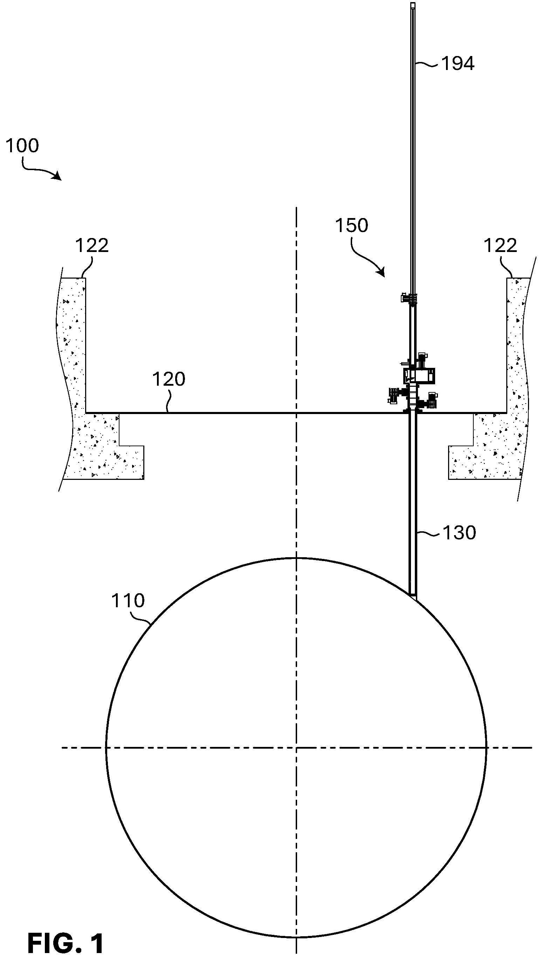

Figure 1 is a sectional view illustrating an isotope irradiation system 150 for use in a nuclear reactor assembly 100, according to one embodiment.

The nuclear reactor assembly 100 includes a reactor vessel 110, which may be a calandria. A reactivity mechanism deck (RMD) 120 may be positioned horizontally above the reactor vessel 110 and protected by radiation shielding 122. In alternative embodiments, the RMD may be located vertically beside the reactor vessel 110.

A thimble 130 may extend between the RMD and the top of the core 110. Only one thimble 130 is illustrated in Figure 1 for simplicity and ease of explanation.

The isotope irradiation system 150 can be used for loading and retrieving isotope targets, and for transporting the isotope targets to a desired location in the reactor vessel for isotope irradiation, which will be explained in detail below.

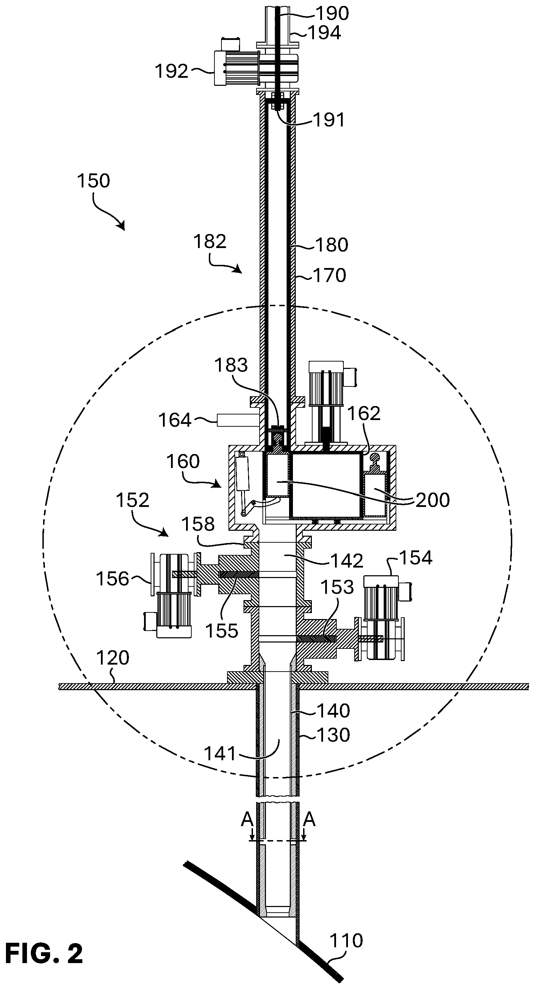

Figure 2 illustrates a zoomed-in view of the isotope irradiation system 150. As shown, the isotope irradiation system 150 may generally include a removeable support structure 140, interfacing system 152, a cartridge load and retrieval system 160, and an isotope target transportation system 182.

The removeable support structure 140 may be secured within the thimble 130. The removeable support structure 140 may have a generally cylindrical shape with a hollow interior 141 and may be concentric with the thimble 130. The removeable support structure 140 may be secured within the thimble using a mounting mechanism that includes mounting devices located near the top and bottom ends of the removeable support structure 140 (note that terms such as "top", bottom", "right", "left", "down", "up" etc. are used to refer to the locations or directions of various components as they appear in the figures, simply for ease of explanation, and are not to be taken as the only possible location or direction for those components unless explicitly described otherwise). The length of the removeable support structure 140 may be about the length of the thimble 130 so that a first mounting device is located near the upper end of the thimble 130, and a second mounting device is located near the lower end of the thimble 130, as shown.

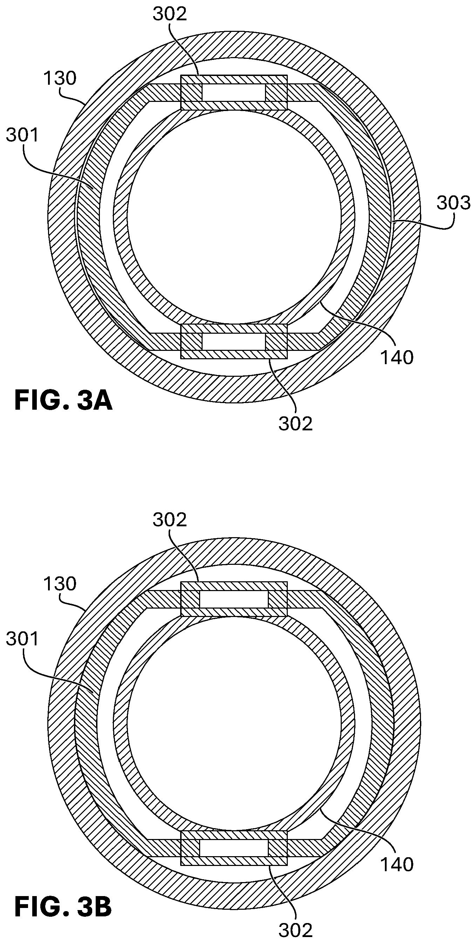

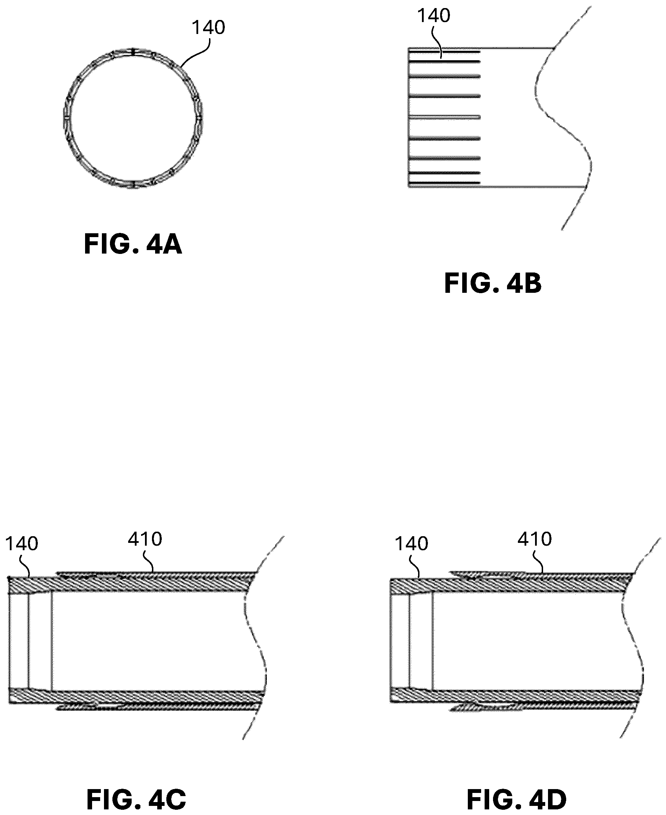

In some embodiments, the hollow interior 141 may taper inwards at the bottom end. In some embodiments, the diameter of the hollow interior 141 at the bottommost end may be approximately 98mm. This is only required in certain embodiments. There are at least two different systems for securing the support tube inside the thimble. The first (shown in Figures 4A to 4D and described in more detail below, uses two concentric tubes. The outer one is flared near the end of the tube, the inner tube has a raised ring feature on its outer diameter to open up the flare in the outer tube thereby securing the overall structure inside the thimble. The inside of the inner tube is also tapered inward at the end and this has a matching taper on the driving ram. This is meant to provide a guiding and centering ramp for the ram that will lower through here to deliver the cartridge into the core. This also a safety feature that prevents the ram from dropping into core, if a significant, highly unlikely mechanical failure further up caused the ram to disconnect from the drive mechanism. The inner diameter measurement where there is no taper may be around 102mm. The tapered portion ID may be around 98mm. An alternative system for securing the support tube inside the thimble is using small hydraulic cylinders as shown in Figures 3A and 3B, and as described below.

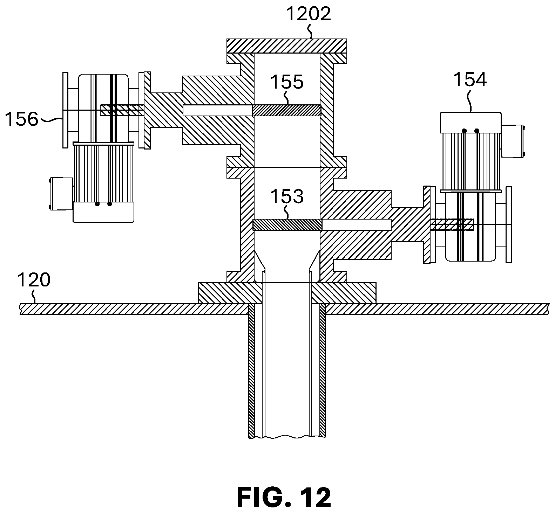

The removeable support structure 140 may facilitate the transportation and placement of isotope targets within the reactor vessel 110 for isotope irradiation, thereby eliminating the need to install new guide tubes for performing the irradiation. The removeable support structure 140 does not protrude into the core 110, which in turn means that the view from the viewport can be free of obstruction caused by such guide tubes. This may reduce or eliminate the need to look to costly alternatives to view inside of the reactor vessel during activities such as visual inspection, maintenance, or repair. This may also alleviate the burden of maintaining and repairing such guide tubes within the reactor vessel, which may be time consuming and dangerous. The interfacing system 152 may include a plurality of gates 153, 155 operated by valves 154, 156, respectively. The two gate valve mechanisms may operate between an open state and a closed state. In the closed state, the plurality of gates 153, 155 may be positioned within an internal cavity 142 of the interfacing system 152 (shown in Figure 12). In the open state, the plurality of gates 153, 155 may be positioned away from the internal cavity 142, in respective gate housing cavities of the interfacing system 152, as shown in Figure 2. Although two gate valve mechanisms are illustrated for the interfacing system 152, in some embodiments one gate valve mechanism may be used, and in some other embodiments, more than two gate valve mechanisms may be used. In some embodiments, other valve mechanisms such as ball valves, buttery valves, or the like, or a different mechanism such as plugs or flexible seals, may be used in addition to or instead of the illustrated gate valve mechanisms. The interfacing system 152 allows for the nuclear reactor assembly 100 to continue operations by maintaining the reactor containment boundary even if parts of the cartridge load and retrieval system 160 or the isotope target transportation system 182 need to be removed, replaced, maintained, etc.

The cartridge load and retrieval system 160 may be used for the loading and retrieval of isotope targets, which may be contained in magazines or cartridges 200, to and from the isotope irradiation system 150. In some embodiments, the cartridge load and retrieval system 160 may include a rotatable device, such as a spin table 162, for facilitating an easier and faster loading and retrieval process. When the cartridge is deposited into the rotatable device or when it is in the first position, it may be automatically placed in an existing shielding flask. The cartridge load and retrieval system 160 may further include means to facilitate releasably locking the cartridges 200 to the isotope target transportation system 182.

The isotope target transportation system 182 may be used as transportation means for cartridges 200 containing isotope targets. More specifically, the ITT may operate to releasably engage with a cartridge 200 containing isotope targets at a locking/unlocking position, transport the cartridge 200 through the internal cavity 142 and the removeable support structure 140 and into the reactor vessel 110 so that isotope irradiation can occur via exposure to neutron flux, and transport the cartridge 200 back from the reactor vessel 110 after irradiation, to a position where the cartridge 200 can be disengaged from the isotope target transportation system 182, deposited into the shielding flask and retrieved using the cartridge load and retrieval system 160.

The removeable support structure 140 may be secured within the thimble 130 using a mounting mechanism. The mounting mechanism may be implemented in various ways. At least one mounting mechanism is located at or near the bottom of the thimble. In addition the support structure is also fastened to the RMD at the top. This gives the support structure at least two connection points that secures it in place.

For example, referring to Figures 3A and 3B, a cross-sectional view of the removeable support structure 140 as denoted by line A - A in Figure 2, is illustrated, which shows a brake device 301 employed as part of the mounting mechanism. As shown, the thimble 130 houses the removeable support structure 140 therein, and the brake device 301 is positioned at the outer circumference of the removeable support structure 140 to engage the inner wall of the thimble 130. The brake device 301 includes pistons 302. Figure 3A illustrates a view wherein the brake device 302 has not yet been engaged, while Figure 3B illustrates a view wherein the brake device 302 has been engaged to secure the removeable support structure 140 to the inside of the thimble 130.

In the view shown in Figure 3A, the removeable support structure 140 is not securely mounted within the thimble, i.e., it is freely moveable within the thimble 130 due to a spacing 303 that is maintained between the brake device 301 and the thimble 130. In the view shown in Figure 3B, the removeable support structure 140 is securely mounted within the thimble. This is achieved by pressurizing the pistons 302 which may be helium pistons 302 that expand and contract the brake device 301. Other types of pistons may be used. This expansion allows the brake device 301 to fill the spacing 303 and apply pressure against the inner wall, effectively securing the removeable support structure 140 within the thimble 130. To pressurize the helium pistons 302, a helium line (not shown) connected at one end to a source (e.g., located above the reactivity management deck 120) and connected at the other end to the helium pistons 302, may be energized, thereby energizing the pistons 302. The helium pistons may remain energized for as long as is required to secure the removeable support structure 140 within the thimble 130. When desired, e.g., to perform maintenance or repair on the removeable support structure 140, the pressure may be removed, thus compressing the brake device 301 and allowing the removeable support structure 140 to be moved. A similar mechanism may be used to mount the removeable support structure 140 at the top end, near the reactivity management deck 120.

Figures 4A-4D illustrate an alternative mounting mechanism. Referring to Figures 4A and 4B, a top view and a side view of a brake device 410 are respectively shown. Brake device 410 may be a flaring tube 410 which can be expanded and compressed. The flaring tube 410 is mounted on the outer circumference of the of the removeable support structure 140 to engage the inner wall of the thimble 130. The flaring tube 410 may include an outer tube having an outer surface with a flared portion, and an inner tube ring. This alternative mounting mechanism does not require any hydraulic or pneumatics. Instead, the outer tube 410 has a flared end, the inner tube 140 has a raised ring feature on its outer diameter. When the two tubes slide against each other such that the flared end on the outer tube is located over the raised feature on the inner tube, this expands the outer diameter of the outer tube thereby securing it to the thimble. Figures 4C and 4D are side sectional views illustrating the brake device 410 of Figures 4A and 4B in operation, according to one embodiment. In the view shown in Figure 4C, the flaring tube is in a compressed state, i.e., the removeable support structure 140 would be freely moveable within the thimble 130. In this compressed state, it the outer diameter of the flaring tube 410 may be approximately 141.3 mm. In the view shown in Figure 4D, the flaring tube 410 is in an expanded state such that the removeable support structure 140 and the flaring tube 410 would be securely held within the thimble 130. In the expanded state, the outer diameter of the flaring tube 410 may be approximately 145.8mm. A similar mechanism may be used to mount the removeable support structure 140 at the top end, near the reactivity management deck 120.

The mounting mechanisms discussed in relation to Figures 3A-3B and 4A-4D may be operated manually, e.g., as desired by operating personnel. It may be operated remotely by radio signals (Wi-Fi) or by robotics.

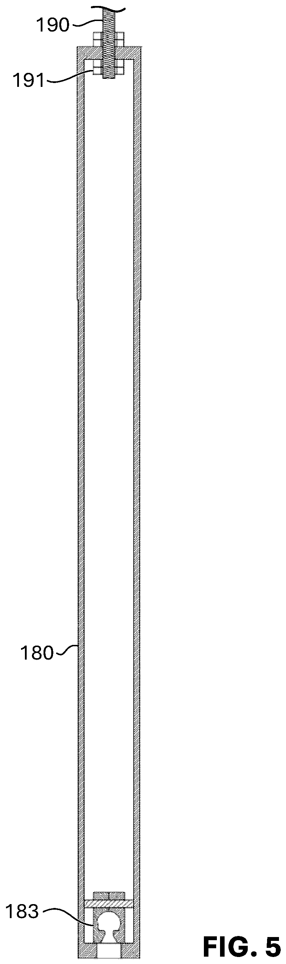

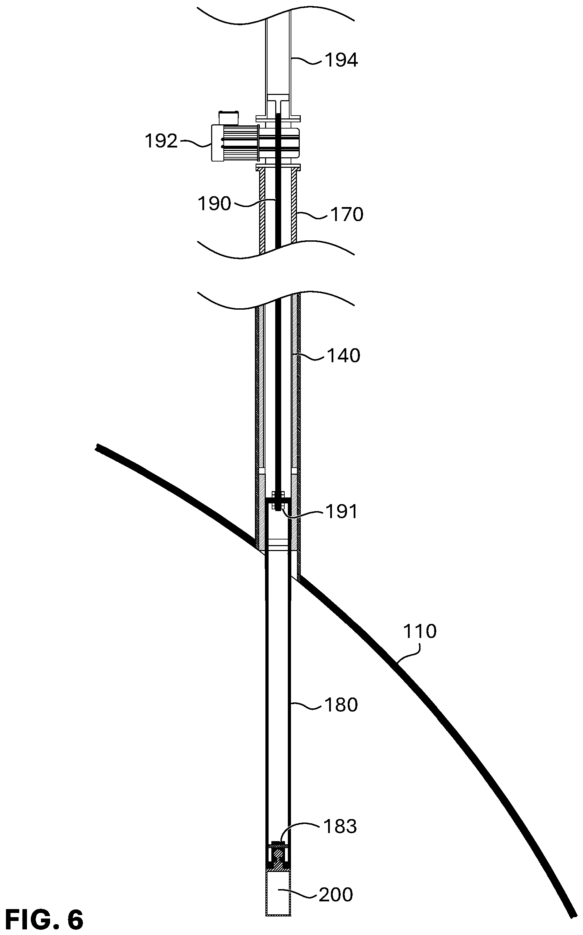

As mentioned previously, the isotope target transportation system 182 may be used as transportation means for cartridges 200 which contain isotope targets. In some embodiments, the isotope target transportation system 182 may include a ram 180, as best shown in Figure 5. Figure 5 illustrates a side sectional view of the ram 180. The ram 180 may be generally cylindrical in shape, and may be dimensioned to fit within the hollow interior 141 of the removeable support structure 140, as shown for example, in Figure 6.

In some embodiments, the ram 180 may have a first end that is secured to a threaded rod 190 using one or more nuts (nut) 191. The ram 180 may further include, at a second end, a spring-loaded gripper 183. The spring-loaded gripper 183 may be used for releasably gripping a magazine or cartridge 200 containing isotope targets, as will be discussed further below.

Referring briefly to Figure 2, the ram 180 may normally be located in a housing 170 of the isotope target transportation system 182, as shown. A state in which the ram 180 is housed in housing 170 may be referred to as a resting position or a loading/unloading position of the ram 180. Upon loading of a cartridge 200 into the isotope irradiation system 150, the cartridge 200 may be releasably locked to the spring-loaded gripper 183 of the ram 180 when the ram is in its resting position, and the ram 180 may be configured to travel downward with the cartridge 200 into the reactor vessel 110 in order for isotope irradiation to be performed for the isotope targets contained inside the cartridge 200, as shown, for example, in Figure 6.

Referring to Figure 6, in some embodiments the threaded rod 190 may be connected to a drive unit, for example, drive unit 192, to enable transportation of the combination of the ram 180 and the cartridge 200.

In some embodiments, the threaded rod 190 and the ram 180 secured to the rod 190 may be configured to be non-rotating components of the isotope target transportation system 182, and a nut (not shown) may be configured to be a rotating component of the isotope target transportation system 182. In some examples, the threaded rod 190 and the nut may be an ACME rod and ACME nut. In other examples, the threaded rod 190 and the nut may be a ball screw rod and a ball nut. The drive unit 192 may contain a motor for providing rotational force to the nut, which in turn achieves linear motion of the threaded rod 190 and the attached ram 180 and cartridge 200. In such embodiments, since the threaded rod 190 is required to be driven up and down in the isotope irradiation system 150, a housing 194 may be provided to contain the threaded rod 190, for example, when the ram 180 is in its resting position. The housing 194 may be configured to accommodate the full length of the threaded rod 190 when the ram 180 is in its resting position, as shown, for example, in Figure 1.

Implementing the isotope target transportation system 182 to transport cartridges containing isotope targets into and out of the reactor vessel 110 may be implemented in various other ways.

For example, in some embodiments, a threaded rod similar to rod 190 may be positioned within the isotope irradiation system 150 and configured to rotate but remain axially stationary. The threaded rod may be connected to a drive unit similar to drive unit 192. A carrier secured to the threaded rod may releasably attach to a cartridge containing isotope targets, and may be transported along with the cartridge into and out of the reactor vessel 110 via operation of the drive unit. In such embodiments, a vertically extended housing such as housing 194 is not necessary. In some other embodiments, a rack and pinion system may be used. The rack may be positioned within the isotope irradiation system 150 and configured to be stationary, and a carrier that is releasably attachable to a cartridge containing isotope targets may include a driven pinion to transport the carrier and an attached cartridge into and out of the reactor vessel 110.

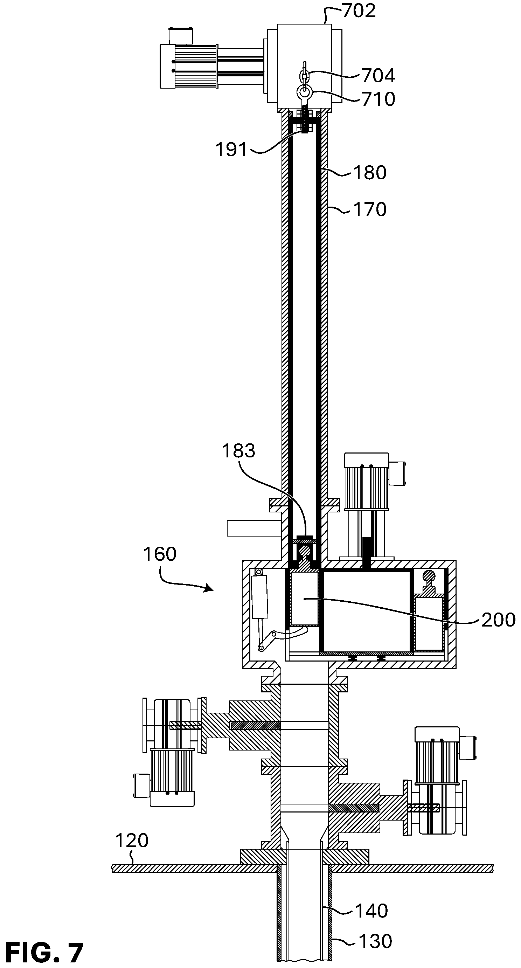

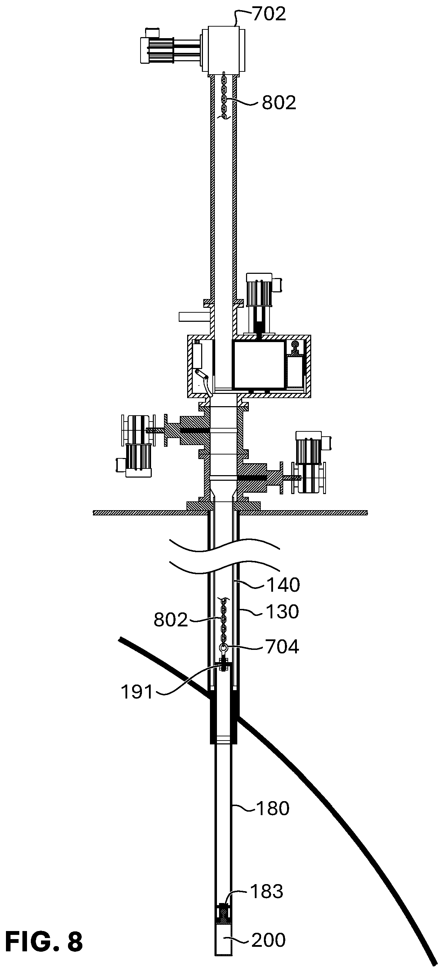

In some other embodiments, a push/pull chain hoist may be used, as illustrated by Figures 7 and 8. In such embodiments, the isotope target transportation system 182 may include a chain block 702, a load chain 802, a chain hook 804, and a screw, such as eye screw 710 secured to ram 180 using nut 191. The chain hoist may further include a motor connected to the chain block 702. In the resting position of the ram 180, the chain 802 may be in a retracted and coiled about a chain wheel. Upon loading of a cartridge 200 into the isotope irradiation system 150, the cartridge 200 may be releasably locked to the spring-loaded gripper 182 of the ram 180. The motor may operate to lower and lift the load chain 802 as needed to transport the ram 180 and the attached cartridge 200 into the reactor vessel 110 for isotope irradiation and out of the reactor vessel 110 when the irradiation is finished, as will be apparent to persons skilled in the art.

The aforementioned implementations of the isotope target transportation system 182 may offer several advantages over conventional isotope irradiation systems used at nuclear reactor plants. For example, using the present systems, the operator can determine exactly how far the drive rods or rams are positioned to know exactly where the cartridge is because the lengths and mechanisms of a drive rod or ram are not flexible. In contrast, in conventional systems commonly use pneumatic systems, hydraulic systems, or winch and cable setups to transport containers having isotope targets into the core, using guide tube installed in the core. It may be difficult to positively determine the location of a container transported using these setups, for example because these setups may involve flexible links such as flexible hoses and cables. For example, the location may have to be inferred using other sensors such as winch motor rotary location, or by observing neutronics effects.

By contrast, the isotope target transportation system 182 may not include any flexible link. When using a threaded rod in the isotope target transportation system 182, such as the threaded rod 190 shown in Figures 5 and 6, the exact location of the ram 180 may be known by the number of turns in the nut connected to the threaded rod. When using the rack and pinion system, the exact location of the carrier may be known by the number of turns in the link that drives the pinion. When using the chain hoist system, as illustrated in Figures 7 and 8, the exact location of the ram 180 may be known by the number of turns in the chain wheel. By being able to positively know the location of a cartridge 200 housing isotope targets at all times as it travels to and from the reactor vessel 110, the isotope target transportation system 182 may be able to deliver the cartridge 200 to an exact desired location within the reactor vessel 110 for exposure of the isotope targets to irradiation. The desired location may or may not be at the centerline of the reactor vessel 110.

In an alternative embodiment, a telescopic ram can be used, driven in and out with the chain mechanism. In this embodiment, the selected chain mechanism is one that can push as well as pull.Further, by using the isotope target transportation system 182 in combination with the removeable support structure 140 to transport cartridges 200 into and out of the reactor 110, there are no components of the isotope irradiation system 150 that permanently protrude into the core 110 to obstruct the view from the viewport, when there are no targets being irradiated. The isotope irradiation system is installed in the viewing port thimble. Since the present system does not use a guide tube that goes from thimble into the core, the operator only needs to remove the removable parts of the irradiation system to be able to use the viewing port for visual inspections or start up instrumentation. Accordingly, when not using the isotope irradiation system 150, the port (thimble) may be used for its other purposes such as visual inspection of equipment, maintenance, or repair or start up.

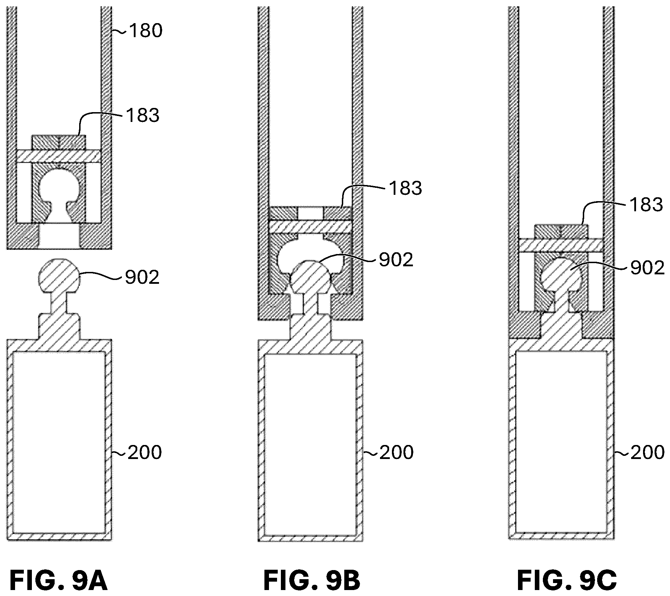

Referring to Figures 9-11, the cartridge load and retrieval system 160 is described in more detail. As previously mentioned, a cartridge 200 may be used to house isotope targets throughout the irradiation process. In some embodiments, the outer diameter of the cartridge 200 may be approximately 90mm, the total height of the cartridge 200 may be approximately 263 mm, and the height of the inner chamber of the cartridge 200 that contains the isotope targets may be approximately 170 mm. The cartridge 200 may be made of a material that can withstand corrosion and high temperatures while being safe for handling by personnel in an environment external to the nuclear core, such as those known in the art. Accordingly, cartridge 200 may conveniently be used while the isotope targets are transported to and from a nuclear reactor plant. This may address challenges associated with separate flasking operations that may be required for conventional isotope irradiation mechanisms, where a separate flask is used for the transportation and handling of the isotope targets so that the isotope targets must be transferred between the transportation flask and a container for use with the isotope irradiation mechanism. Flasking operations may be unsafe and time consuming.

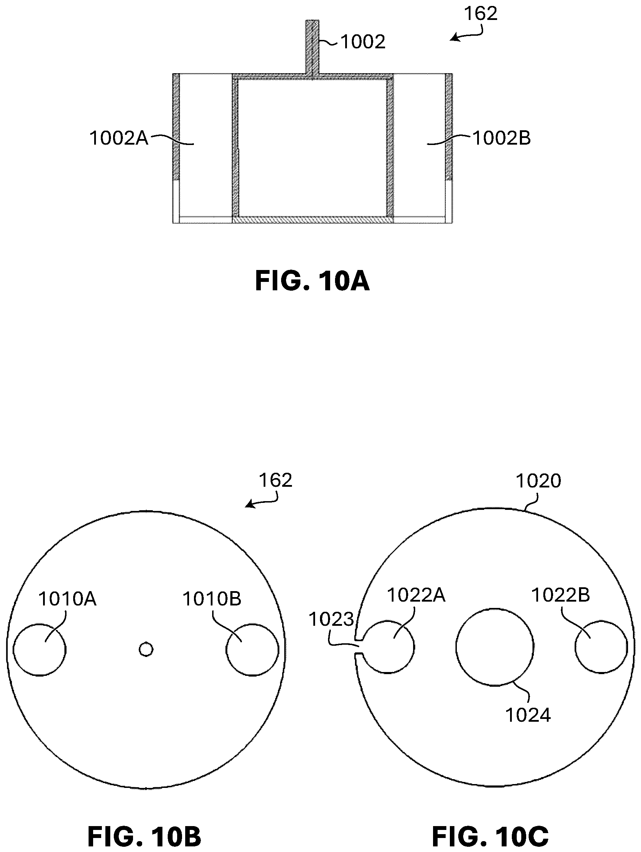

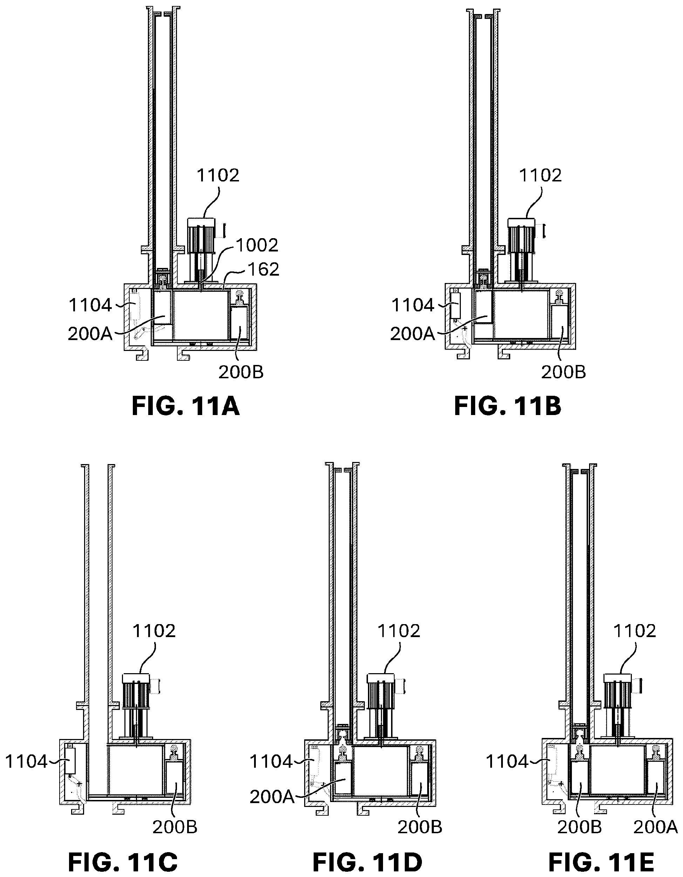

Referring briefly to Figures 10A-10C, a spin table 162 is shown. Figure 10A is a sectional view of the spin table 162, Figure 10B is a top view of the spin table 162, and Figure 10C illustrates a rotating platform or plate 1020 of the spin table 162. In some embodiments, loading and retrieval into and from the isotope irradiation system 150 may involve use of the spin table 162. The spin table 162 may include a frame 1002 connected to a drive unit (shown in Figure 1), chambers 1002A and 1002B, and the rotating platform 1020. Each of the chambers 1002A and 1002B may be dimensioned to fit a cartridge 200, as shown (which may include a shielding flask), for example, in Figure 8. Openings 1010A and 1010B and openings 1022A and 1022B may correspond to the chambers 1002A and 1002B, so that chamber 1002A, opening 1010A, and opening 1022A together form an open-ended column and the chamber 1002B, opening 1010B, and opening 1022B together form another open-ended column. The openings 1010A, 1010B, 1022A, 1022B allow for a cartridge 200 to be transported into and out of the reactor vessel 110. In operation, a cartridge 200 containing isotope targets may be inserted into chamber 1002B by an entity (e.g., a person or an automated mechanism). Once inserted, the spin table 162 may be rotated by the drive unit (e.g., manually or electrically) by approximately 180 degrees, such that the cartridge 200 is axially aligned with the ram 180. At this point, to prevent the cartridge 200 from falling through the opening 1022B towards the reactor vessel 110, a loading lever 1104 (see Figures 11A-E) may support the cartridge 200 from the bottom. Lever 1104 keeps the cartridge 200 in place and prevents it from falling through the mechanism and into core while it is being locked into the drive ram (or ball screw etc.). The slot 1023 can allows space for the lever 1104 to operate. The slot may be symmetrical on both chambers, so that when the rotation device rotates to the next loading position, the same lever action can be accomplished for next cartridge. Slot 1024 is provided to accommodate a shaft from a motor (not shown) that can connect into slot 1024 and that will rotate the whole mechanism. It can be of varying sizes and shapes to accommodate various shafts.

Referring to Figures 9A-9C, once the cartridge 200 is loaded, the cartridge 200 may be releasably secured to a device, such as ram 180, for transporting the cartridge 200 to the irradiation site, as follows. As mentioned, ram 180 may include a spring-loaded gripper 183. The gripper 183 may include a cavity formed by two halves of a clip, as shown in Figure 9A. The cartridge 200 may include, at one end, a plug 902 for insertion into the cavity of the gripper 183. As illustrated in Figure 9B, as the plug 902 is pushed into the cavity with an insertion force, the spring of the spring-loaded gripper 183 may be stretched and the two halves of the clip may extend away from each other to allow for the plug 902 to be fully inserted into the cavity. This insertion force may be provided by the loading lever 1104 pushing the cartridge 200 upwards toward the gripper 183. Once fully inserted, the two halves are in contact once more and the cartridge 200 is held in place by a force exerted by the spring-loaded gripper 183, as illustrated in Figure 9C.

The target cartridge 200 needs to be in a shielded flask to be transported. In the present invention, as the cartridge is deposited into the turn table, it is automatically deposited inside a shielded flask, thereby eliminating the need for a separate flasking process. The shielding flask will remain in the turning platform as the drive mechanism picks up the cartridge and drives it into and back from core, where it deposits it in the flask again.

Figures 11A-11E illustrate an example sequence of steps for loading and retrieving a target cartridge 200 to and from the isotope irradiation system 150. In Figure 11A, a first cartridge 200A containing isotope targets is shown releasably mated to the spring-loaded gripper 183 of the ram 180, having been supported and pushed by extension of the loading lever 1104. A second cartridge 200B containing isotope targets is shown loaded on an opposite side of the spin table 162. With the first cartridge 200A successfully retained by the gripper 183, the loading lever 1104 may retract as shown in Figure 11B, to allow for the isotope target transportation system 182 to transport the ram 180 and the first cartridge 200A to a desired irradiation site in the reactor vessel 110, as described hereinbefore. Figure 11C illustrates a sectional view when the first cartridge is at the irradiation site. Features relating to connection mechanisms between the ram 180 and the rest of the isotope target transportation system 182, e.g., threaded rod 190 or load chain 802 have been omitted for simplicity. Once irradiation of the isotope targets has been performed, a retrieval process for the cartridge 200A is initiated. The isotope target transportation system 182 transports the ram 180 and the first cartridge 200A out of the reactor vessel 110 and back to the position shown in Figure 11B. As shown in Figure 11D, the first cartridge 200A is released from the gripper 183, for example by using a push pin 164 (see Figure 1) which may insert a key (not shown) into the gripper 183, allowing the first cartridge 200A to be unlocked from the gripper 183. At this stage, the loading lever 1104 may be extended to support the weight of the first cartridge 200A. The spin table 162 may then be rotated around 180 degrees. As shown in Figure 11E, the second cartridge 200B is now axially aligned with the ram 180, and the first cartridge 200A may now be retrieved by an entity for transportation to a medical or pharmaceutical facility.

Use of the spin table 162 may provide several advantages over conventional mechanisms used to load and unload containers containing isotope targets into an irradiation system. For example, conventional mechanisms may be implemented using extensive hydraulic or pneumatic systems via tubing. Such systems are prone to cause issues and lack accurate tracking of the containers. For example, containers have been known to get stuck along a passage at unknown locations. The cartridge load and retrieval system 160 minimizes transporting and handling of the cartridges 200 by performing the loading retrieval, and flasking of the targets in/out of the isotope irradiation system 150 in the reactivity management deck 120 area.

Figure 12 illustrates a sectional view of the interfacing system 152. Figure 12 illustrates a scenario when the isotope irradiation system 150 is not in operation. As shown in Figure 12, the two gate valve mechanisms of the interfacing system 152 are in a closed state and the plurality of gates 153, 155 are positioned within the internal cavity 142. Sealing mechanisms may be provided for gates 153, 155 to ensure a complete seal is achieved by the gates 153, 155. The closed state may allow the moderator pressure boundary to be maintained even when the nuclear reactor assembly 100 is running. In this way, the interfacing system 152 allows for continued operation of the nuclear reactor assembly 100 even in situations where the cartridge load and retrieval system 160 and isotope target transportation system 182 must be removed, inspected, repaired, or serviced. In some embodiments, the cartridge load and retrieval system 160 and the isotope target transportation system 182 may be dismounted and a cap 1202 may be fitted on top of the interfacing system 152 when the isotope irradiation system 150 is not in use, to provide an added layer of protection and maintenance of the reactor containment boundary. As previously mentioned, the interfacing system 152 to continue operations even if parts of the cartridge load and retrieval system 160 or the isotope target transportation system 182 need to be dismounted. The interfacing system 152 can also be used for visual inspections of the calandria through the viewing port, or for installation of the start up instrumentation (SUI) when the cartridge load and retrieval system is removed. The present interfacing system thus allows for flexible swapping out of the various mechanisms that are installed onto it.

It is noted that although the embodiments described hereinbefore discussed installing the isotope irradiation system 150 to line up with a thimble 130, this is not required, and the isotope irradiation system 150 may alternatively be installed in another type of vertical port that extends, or a dedicated vertical port may be constructed for installation of the isotope irradiation system 150, e.g., away from sensitive reactor equipment. Further, although the embodiments described hereinbefore discussed a vertical configuration for the isotope irradiation system 150, it is also possible for the isotope irradiation system 150 to be implemented in a horizonal configuration. For example, the removeable support structure 140 may be installed in an existing horizontal port in the nuclear core 110, or a new dedicated horizontal port may be constructed for installation of the isotope irradiation system 150, e.g., away from sensitive reactor equipment.

### General

Note that the expression "at least one of A or B", as used herein, is interchangeable with the expression "A and/or B". It refers to a list in which you may select A or B or both A and B. Similarly, "at least one of A, B, or C", as used herein, is interchangeable with "A and/or B and/or C" or "A, B, and/or C". It refers to a list in which you may select: A or B or C, or both A and B, or both A and C, or both B and C, or all of A, B and C. The same principle applies for longer lists having a same format.

Although the present invention has been described with reference to specific features and embodiments thereof, various modifications and combinations may be made thereto without departing from the invention. The description and drawings are, accordingly, to be regarded simply as an illustration of some embodiments of the invention as defined by the appended claims, and are contemplated to cover any and all modifications, variations, combinations or equivalents that fall within the scope of the present invention. Therefore, although the present invention and its advantages have been described in detail, various changes, substitutions, and alterations may be made herein without departing from the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. An isotope irradiation system for use in a nuclear reactor facility comprising a reactor vessel, a reactivity mechanism deck, and a port **extending between the reactivity mechanism deck** and the reactor vessel, the isotope irradiation system comprising:
a removeable support structure configured to be secured within the port, the removeable support structure comprising:
a first end and a second end, the second end configured to be adjacent a bottom end of the port;
a hollow interior to enable travel of a cartridge containing isotope targets therein; and
an isotope target transportation system which transports irradiation targets into and out of the reactor vessel.

2. An isotope irradiation system for use in a nuclear reactor facility comprising a reactor vessel and a port extending to the reactor vessel, the isotope irradiation system comprising:
a removeable support structure configured to be secured within the port, the removeable support structure comprising:
a first end and a second end, the second end configured to be adjacent a bottom end of the port; and
a hollow interior to enable travel of a cartridge containing isotope targets therein;
an isotope target transportation system which transports irradiation targets into and out of the reactor vessel; and
**a plurality of gate valves** within the support structure, each gate valve operable between an open state and a closed state;
preferably wherein in the closed state, each gate valve is positioned within the hollow interior and in the open state the gate valve is positioned away from the hollow interior;
preferably wherein the gate valve comprises a plug or flexible seal.

3. An isotope irradiation system for use in a nuclear reactor facility comprising a reactor vessel and a port extending to the reactor vessel, the isotope irradiation system comprising:
a removeable support structure configured to be secured within the port, the removeable support structure comprising:
a first end and a second end, the second end configured to be adjacent a bottom end of the port; and
a hollow interior to enable travel of a cartridge containing isotope targets therein;
an isotope target transportation system which transports irradiation targets into and out of the reactor vessel; and
**a cartridge load and retrieval system** for loading and retrieval of isotope targets contained in the cartridge, the cartridge load and retrieval system comprising a rotatable device for **rotating** the cartridge into and out of the hollow interior;
preferably wherein the rotatable device is a spin table;
preferably further comprising a mechanism to releasably lock the cartridge.

4. An isotope irradiation system for use in a nuclear reactor facility comprising a reactor vessel and a port extending to the reactor vessel, the isotope irradiation system comprising:
a removeable support structure configured to be secured within the port, the removeable support structure comprising:
a first end and a second end, the second end configured to be adjacent a bottom end of the port; and
a hollow interior to enable travel of a cartridge containing isotope targets therein;
an isotope target transportation system which transports irradiation targets into and out of the reactor vessel; and
a **brake device** for securing the removable support structure within the hollow core;
preferably wherein the brake comprises a piston that expands and contracts to apply pressure against an inner wall or the hollow core to secure the removable support structure within the hollow core;
preferably wherein the brake comprises a flaring tube that expands and compresses, the flaring tube having a outer tube with an outer surface with a flared portion and an inner tube encompassing an inner ring, wherein when expanded, the inner ring causes the flared portion of the outer tube to expand, securing the flaring tube and the removable support system within the hollow core.

5. The isotope irradiation system of claims 1 to 4, wherein the port is a thimble.

6. The isotope irradiation system of claims 1 to 5, wherein the removeable support structure further comprises a mounting mechanism for securing the removeable support structure within the port;
preferably wherein the mounting mechanism includes a brake, the brake positioned on an outer circumference of the removeable support structure;
preferably wherein the brake device can be manipulated between a disengaged mode and an engaged mode, wherein the removeable support structure is configured to move freely within the port when the brake device is in the disengaged mode, and wherein the removeable support structure is configured to be secured within the port when the brake device is in the engaged mode;
preferably wherein the brake comprises the brake of claim 4.

7. The isotope irradiation system of claims 1 to 6, wherein the isotope target transportation system comprises:
a ram, the ram including a gripper for engaging the cartridge containing isotope targets; and
a drive unit configured to connect to the ram and transport the ram between a first position and a second position, wherein the ram is configured to be located external to the reactor vessel in the first position, and the ram is configured to be located in the reactor vessel in the second position;
preferably wherein the drive unit is configured to transport the ram between the first position and the second position using a ball screw mechanism, or a rack and pinion mechanism, or a telescopic mechanism;
preferably wherein the ram includes a spring loaded gripper;
preferably wherein the gripper comprises a cavity formed by two halves of a clip, and a spring of the spring loaded gripper stretches so that the two halves of the clip extend away from each other to allow for a portion of the cartridge to be inserted into the cavity and once inserted the two halves are in contact again and the cartridge is held in place by a force exerted by the spring loaded gripper.

8. The isotope irradiation system of claims 1 to 7, wherein the isotope target transportation system comprises a chain hoist comprising a chain block, a load chain, a chain hook and a screw, a motor connected to the chain block, wherein the chain may be retracted and coiled about a chain wheel, so that the motor lowers and lifts the load chain into and out of the reactor vessel.

9. The isotope irradiation system of claims 1 to 8 further comprising a cartridge load and retrieval system, the cartridge load and retrieval system comprising:
a rotatable device including at least one opening for housing the cartridge containing isotope targets, the rotatable device configured to facilitate loading, flasking and retrieval of the cartridge at a first position and configured to facilitate a releasable connection between the cartridge and an isotope target transportation system at a second position; and
a loading lever for supporting the cartridge into and out of the releasable connection.

10. The isotope irradiation system of claims 1 to 9, further comprising a pressure boundary mechanism for selectively maintaining a moderator pressure boundary between a first portion of the isotope irradiation system including the removeable support structure and a second portion of the isotope irradiation system including an isotope target transportation system and a cartridge load and retrieval system, wherein the pressure boundary mechanism includes a gate valve operable between an open state and a closed state.

11. The isotope irradiation system of claims 1 to 10 wherein the nuclear reactor facility is a CANDU nuclear reactor facility.

12. The isotope irradiation system of claims 1 to 11 wherein the reactivity mechanism deck is a horizontal reactivity mechanism deck or a vertical reactivity mechanism deck.

13. The isotope irradiation system of claims 1 to 12 wherein the cartridge is deposited into a shielding flask in the rotatable device;
preferably wherein the shielding flask remains in the rotatable device when the isotope target transportation system transports irradiation targets into the reactor vessel and the isotope target transportation system deposits irradiated targets into the shielding flask after removal from the reactor vessel.

14. The isotope irradiation system of claims 1 to 13 wherein the removeable support structure is secured within the port at or near the bottom of the port and secured at or near the reactivity mechanism deck.

15. A method of irradiating isotope targets in a nuclear reactor facility comprising a reactor vessel, a reactivity mechanism deck, and a port extending between the reactivity mechanism deck and the reactor vessel, the method comprising:
transporting a cartridge containing isotope targets to the nuclear reactor facility;
from the reactivity mechanism deck, loading the cartridge into an isotope irradiation system using a rotatable device of the isotope irradiation system, at a first position of the rotatable device;
rotating the rotatable device from the first position to a second position, wherein in the second position the cartridge is linearly aligned with the port;
releasably locking the cartridge to a first end of a ram, wherein a second end of the ram is connected to a drive unit;
transporting the cartridge past the port into the reactor vessel using the drive unit;
exposing the isotope targets in the cartridge to irradiation;
transporting the cartridge out of the reactor vessel using the drive unit;
releasing the cartridge from the first end of the ram onto the rotatable device;
rotating the rotatable device from the second position to the first position; and
from the reactivity mechanism deck, retrieving the cartridge from the rotatable device at the first position;
wherein a removeable support structure is secured within the port, the removeable support structure having a hollow interior to allow travel of the cartridge containing the isotope targets therein, and
wherein a length of the removeable support structure is similar to a length of the port.
